# FASCICULE DE BREVET EUROPEEN

(11) **EP 0 559 989 B1**
(45) Date de publication et mention de la délivrance du brevet: **21.02.1996**
(21) Numéro de dépôt: 92403342.6
(22) Date de dépôt: 09.12.1992
(51) Int. Cl.: F16B 43/00

(54) **Dispositif de fixation d'un bouton lumineux sur des plaques supports de différentes épaisseurs**
Element zur Befestigung einer Leuchttaste auf Trägern unterschiedlicher Dicke
Fixation element for a light emitting button of different thicknesses

(30) Priorité: 28.02.1992 FR 9202379
(43) Date de publication de la demande: 15.09.1993
(73) Titulaire: OTIS ELEVATOR COMPANY, Farmington Connecticut 06032 (US)
(72) Inventeur: Depardieu, Thierry Patrick, F-45500 Gien (FR); Dos Reis, Julien, F-45290 Boismorand (FR)
(74) Mandataire: Jolly, Jean-Pierre

(56) Documents cités:
- EP-A- 0 176 663
- FR-A- 2 616 859
- US-A- 4 433 879

## Description

La présente invention concerne un dispositif de fixation d'un bouton lumineux sur une plaque support d'épaisseur variable.

Les boutons lumineux présentent généralement la forme d'une vis creuse pourvue d'un passage axial dans lequel est monté un élément d'éclairage. Le bouton comporte une tête évasée et un corps cylindrique se terminant par une portion filetée de faible épaisseur.

Selon la technique utilisée jusqu'à présent, un tel bouton est fixé au moyen d'un écrou que l'on visse sur la partie filetée du corps, depuis l'arrière de la plaque support. Toutefois, étant donné que les plaques supports peuvent avoir des épaisseurs qui varient dans des proportions importantes, par exemple entre 0, 8 et 4 mm, il est nécessaire d'utiliser, selon l'épaisseur de la plaque support, une ou plusieurs rondelles formant entretoises, afin de rattraper le jeu entre l'écrou et la plaque support.

Mais ce mode de fixation est long à mettre en oeuvre, car il faut choisir le nombre voulu d'entretoises, les enfiler sur le corps du bouton, puis visser l'écrou. De plus, plusieurs tours d'écrou sont nécessaires pour obtenir un bon serrage.

La présente invention vise à remédier à ces inconvénients en proposant un dispositif permettant de fixer rapidement et simplement un bouton lumineux sur une plaque support d'épaisseur quelconque, sans avoir à utiliser d'entretoises.

L'invention concerne donc un dispositif de fixation, sur une plaque support, d'un bouton lumineux comportant une tête évasée et un corps cylindrique lisse se terminant par une portion filetée, ledit dispositif de fixation comprend :
- un écrou à filetage à droite destiné à être vissé sur la portion filetée du bouton, ledit écrou présentant sur la face qui est en regard de la plaque support plusieurs escaliers s'étendant chacun sur une fraction de la circonférence de l'écrou, ayant tous la même amplitude angulaire, et comprenant chacun un même nombre de marches s'élevant régulièrement l'une par rapport à la précédente d'une hauteur constante prédéterminée,
- et une bague pourvue d'un alésage intérieur lisse, de diamètre légèrement supérieur à celui du corps, ladite bague étant montée coulissante entre l'écrou et la plaque support et présentant sur sa face qui est en regard de l'écrou plusieurs escaliers emboîtables avec ceux de l'écrou.

La fixation du bouton s'effectue d'abord en assemblant l'écrou et la bague par emboîtement de leurs escaliers respectifs, afin de donner à l'ensemble une épaisseur minimale, puis en vissant de quelques tours ledit ensemble sur l'extrémité du bouton en place dans le trou de la plaque support. On repousse ensuite à fond la bague contre la plaque support en la faisant glisser le long du corps du bouton, et enfin on fait tourner la bague jusqu'au moment où au moins l'une de ses marches vienne en prise avec au moins une marche de l'écrou. On parfait enfin le serrage en vissant l'écrou à fond.

L'invention sera mieux comprise à la lecture de la description qui va suivre d'un mode de réalisation, en regard du dessin annexé dans lequel :
La figure 1 est une vue en élévation d'un bouton lumineux en place sur une plaque support représentée en coupe ;
La figure 2 est une vue agrandie en perspective de l'ensemble de l'écrou et de la bague en position superposée ;
Les figures 3 et 4 sont des vues en perspective respectivement de la bague et de l'écrou ;
La figure 5 est une vue partielle en élévation du dispositif de serrage monté sur une plaque support d'épaisseur minimale ; et
La figure 6 est une vue partielle en élévation du dispositif de serrage monté sur une plaque support d'épaisseur maximale.

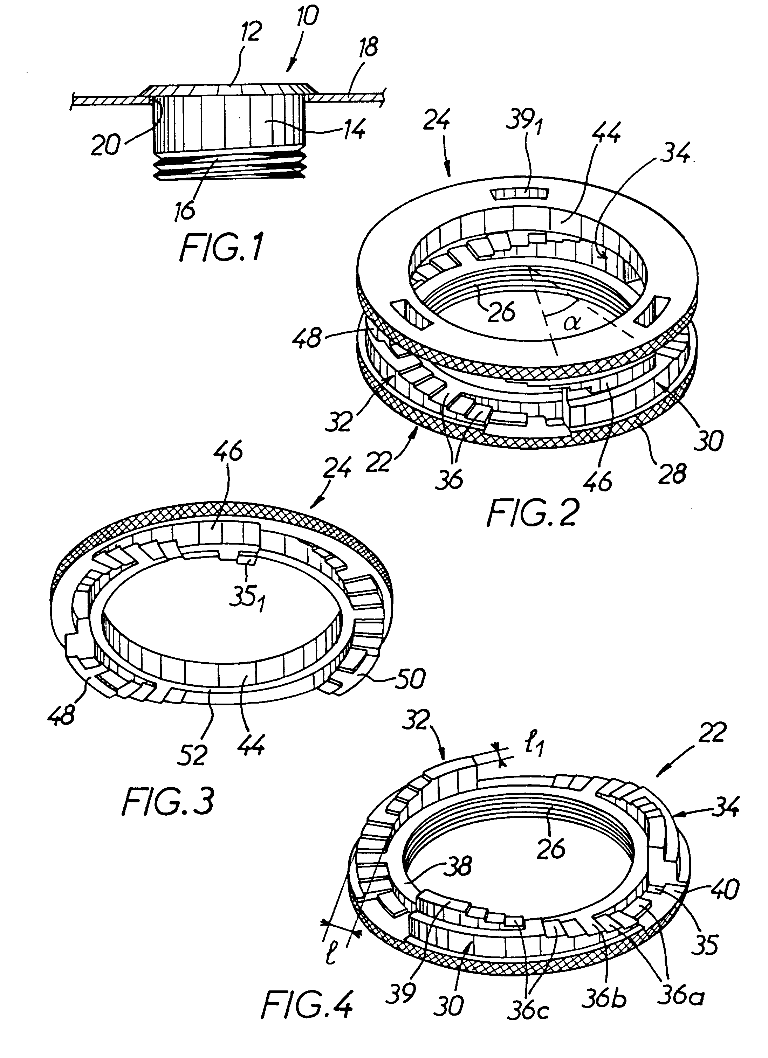

Le bouton lumineux 10 représenté sur la figure 1 est en forme de vis creuse, pourvue d'un alésage axial dans lequel est logé un élément d'éclairage (non représenté), tel que lampe ou diode électroluminescente. Il comprend une tête évasée 12 et un corps cylindrique 14 de moindre diamètre se terminant par une portion filetée 16 à filetage tournant à droite et s'étendant sur une faible longueur du corps.

Le bouton est destiné à être fixé sur une plaque support 18 dont l'épaisseur peut varier de façon importante. Le corps 14 du bouton est introduit dans un trou 20 percé dans la plaque support et ayant un diamètre légèrement supérieur à celui du corps, mais inférieur à celui de la tête 12.

Avec référence aux figures 2 à 4, le dispositif de fixation selon l'invention comprend un écrou de serrage 22 et une bague 24 qui fait office d'entretoise d'épaisseur variable.

L'écrou 22 est constitué par une pièce annulaire présentant intérieurement un filetage 26 de même pas que le filetage 16 du corps de bouton 14, et extérieurement un moletage 28 pour faciliter son entraînement en rotation avec les doigts.

Sur l'une des faces de l'écrou viennent de fabrication plusieurs escaliers 30, 32, 34 comprenant chacun une pluralité de marches 36. Les escaliers s'étendent concentriquement chacun sur une fraction de la circonférence de l'écrou, et ont tous la même amplitude angulaire. Dans le mode de réalisation illustré, l'écrou comporte trois escaliers s'étendant chacun sur 120°, mais il va de soi qu'il peut en comporter deux s'étendant chacun sur la moitié de la circonférence, ou encore quatre qui s'étendent chacun sur le quart de la circonférence.

Une partie des marches de chaque escalier s'élève au-dessus du niveau d'une piste périphérique intérieure 38 de largeur constante qui longe le bord intérieur de l'écrou, et une autre partie s'enfonce sous le niveau de la piste 38, l'épaisseur de l'écrou s'amincissant de plus en plus dans la partie des marches sous-piste.

On ne décrira ci-après que l'escalier 30, les deux autres ayant exactement les mêmes configurations, qui se déduisent de celle de l'escalier 30 par des rotations respectives de 120° et 240°.

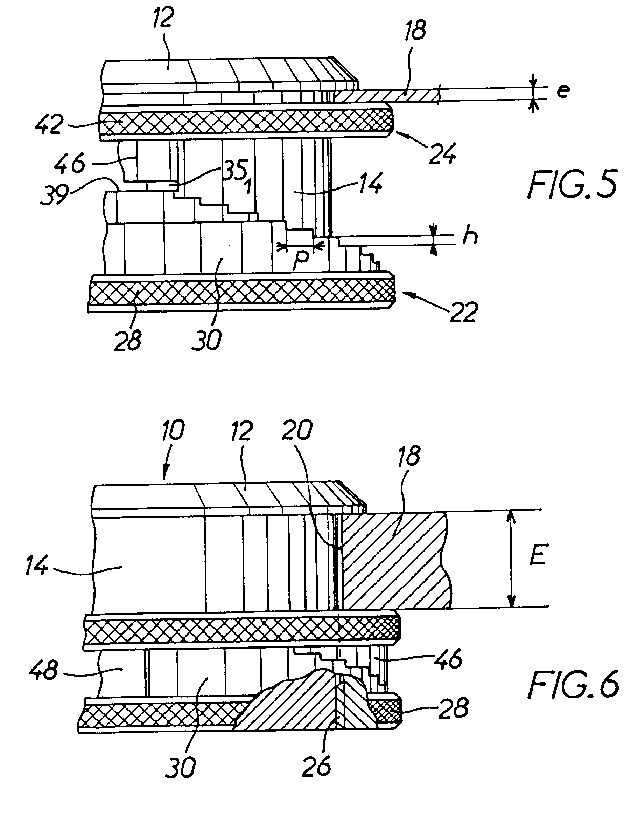

En allant du niveau le plus bas vers le niveau le plus haut, l'escalier 30 comprend un trou 35 qui traverse l'écrou sur toute son épaisseur, laquelle est faible à cet endroit, puis quatre marches 36a situées sous le niveau de la piste 38, une marche 36b au même niveau que la piste et sept marches 36c s'élevant au-dessus du niveau de la piste. La marche la plus supérieure 39 est plus allongée que les autres marches. Comme indiqué sur la figure 5, toutes les marches s'élèvent d'une hauteur constante h par rapport à la précédente et ont la même profondeur p. Par contre, leur largeur est variable. Ainsi, les six marches centrales ont une largeur moyenne l (figure 4), tandis que les quatre marches les plus hautes ont une plus faible largeur l₁. On notera que la seconde marche 36a à partir du bas est au même niveau qu'un large palier 40 formé à mi-épaisseur de l'écrou. Le trou 35 et la troisième marche 36a à partir du bas sont respectivement au-dessous et au-dessus du niveau dudit palier et ont également la largeur étroite l₁.

On décrira à présent la bague 24 en se reportant aux figures 2 et 3. La bague présente elle aussi une forme annulaire avec un moletage extérieur 42. Elle diffère toutefois de l'écrou par le fait qu'elle est pourvue d'un alésage lisse 44 de diamètre légèrement supérieur à celui du corps de bouton 14 de manière à pouvoir coulisser librement sur celui-ci. Sur l'une de ses faces viennent de fabrication des escaliers 46, 48, 50 de forme complémentaire de ceux de l'écrou. Ici également, on retrouve une piste périphérique intérieure 52 et chaque escalier comprend des marches qui s'élèvent graduellement au-dessus de la piste et des marches qui s'enfoncent sous la piste dans l'épaisseur de la bague. Toutes les marches de la bague ont des formes respectivement complémentaires de celles de l'écrou. En particulier, au sommet des escaliers se trouvent des saillies 35₁ destinées à s'emboîter exactement dans les trous 35 de l'écrou, et à l'autre extrémité des escaliers, la bague est percée de trois trous oblongs 39₁ (figure 2) destinés à recevoir les marches supérieures 39 de l'écrou.

On expliquera à présent le mode de fixation du bouton lumineux tout d'abord dans le cas de la figure 5, où la plaque support 18 a l'épaisseur minimale e pour laquelle le dispositif de serrage a été prévu. Dans ce cas, la longueur libre de corps de bouton 14 est suffisamment grande pour que l'on puisse monter séparément la bague et l'écrou. On commence donc par enfiler sur le corps 14 la bague 24, avec sa face plate tournée vers la plaque support, puis on visse l'écrou 22 de quelques tours (1 ou 2) sur la portion filetée 16 du bouton lumineux, ses escaliers étant tournés vers ceux de la bague.

On pousse ensuite à fond la bague contre la plaque support 18 et on la tourne vers la gauche sur la figure 5. Du fait que la plaque support 18 a l'épaisseur minimale, ce sont les trois saillies 35₁ les plus hautes qui viennent en appui sur les marches les plus hautes 39 de l'écrou. On notera que cette rotation de la bague ne peut dépasser un tiers de tour, compte tenu du décalage des escaliers à 120° l'un de l'autre. Enfin, on bloque le dispositif de serrage en vissant à fond l'écrou 22, ce que l'on obtient par un vissage sur une très faible fraction de tour.

Lorsque la plaque support 18 a l'épaisseur maximale E pour laquelle le dispositif de serrage a été prévu (figure 6), on doit d'abord pré-assembler séparément l'écrou et la bague entre eux afin que l'ensemble ait une épaisseur totale minimale. Ceci s'obtient en emboîtant toutes les marches de la bague dans celles de l'écrou. Dans cette position, les pistes 38 et 52 sont appliquées l'une sur l'autre, les marches les plus hautes 39 de l'écrou sont engagées dans les trous 39₁ et les saillies 35₁ de la bague sont engagées dans les trous 35 de l'écrou. L'ensemble ainsi obtenu est vissé sur le bouton lumineux 10 sur un ou deux tours jusqu'à ce que la bague se trouve bloquée contre la plaque support. Ici, on n'a pas eu besoin de pousser la bague ni de la faire tourner à gauche.

Pour une épaisseur de plaque support intermédiaire entre e et E, la rotation à gauche de la bague met en prise certaines parmi ses marches avec les marches correspondantes de l'écrou.

Le dispositif de serrage selon l'invention a donc le grand avantage par rapport à celui de la technique antérieure qu'il peut être adapté à plusieurs épaisseurs de plaques supports sans utilisation d'entretoises de rattrapage de jeu. De plus, il se monte très facilement et rapidement à la main et permet d'obtenir un serrage constant sans avoir à utiliser une clé dynamométrique.

## Revendications

1. Dispositif de fixation d'un bouton lumineux (10) sur une plaque support (18), ledit bouton lumineux comportant une tête évasée (12) et un corps cylindrique lisse (14) se terminant par une portion filetée (16), ledit dispositif de fixation comprend :
- un écrou (22) à filetage à droite destiné à être vissé sur la portion filetée (16) du bouton, ledit écrou présentant sur la face qui est en regard de la plaque support (18) plusieurs escaliers (30, 32, 34) s'étendant chacun sur une fraction de la circonférence de l'écrou, ayant tous la même amplitude angulaire, et comprenant chacun un même nombre de marches (36) s'élevant régulièrement l'une par rapport à la précédente d'une hauteur constante prédéterminée (h),
- et une bague (24) pourvue d'un alésage intérieur lisse (44) de diamètre légèrement supérieur à celui du corps (14), ladite bague étant montée coulissante entre l'écrou et la plaque support et présentant sur sa face qui est en regard de l'écrou plusieurs escaliers (46,48,50) emboîtables avec ceux de l'écrou.

2. Dispositif de fixation selon la revendication 1, caractérisé en ce que l'écrou (22) comporte trois escaliers (30, 32, 34) s'étendant chacun sur 120°.

3. Dispositif de fixation selon la revendication 1, caractérisé en ce que la bague (24) comporte trois escaliers (46,48,50) s'étendant chacun sur 120°.

4. Dispositif de fixation selon la revendication 1, caractérisé en ce que toutes les marches de l'écrou et de la bague ont la même profondeur (p).

5. Dispositif de fixation selon la revendication 1, caractérisé en ce que l'écrou (22) et la bague (24) comprennent respectivement des pistes périphériques intérieures planes (38,52) qui viennent en contact l'une de l'autre lorsque leurs escaliers sont emboîtés les uns dans les autres.

6. Dispositif de fixation selon la revendication 1, caractérisé en ce que les plus hautes marches (39) de l'écrou s'engagent dans des trous (39₁) percés à travers la bague à la partie la plus basse des escaliers de celle-ci.

7. Dispositif de fixation selon la revendication 1, caractérisé en ce que les plus hautes marches (35₁) de la bague s'engagent dans des trous (35) percés dans l'écrou, au bas des escaliers de celui-ci.

8. Dispositif de fixation selon la revendication 5, caractérisé en ce que l'écrou (22) comporte plusieurs marches (36a) qui s'enfoncent sous le niveau de la piste (38), une marche (36b) située au niveau de la piste, et plusieurs marches (36c) qui s'élèvent au-dessus du niveau de la piste.

9. Dispositif de fixation selon la revendication 5, caractérisé en ce que la bague (24) comporte plusieurs marches qui s'enfoncent sous le niveau de la piste (52), une marche située au niveau de la piste, et plusieurs marches qui s'élèvent au-dessus du niveau de la piste.

## Patentansprüche

1. Befestigungsvorrichtung zum Befestigen eines Leuchtknopfs (10) an einer Trägerplatte (18), wobei der Leuchtknopf einen erweiterten Kopf (12) und einen mit einem Gewindeabschnitt (16) abschließenden glatten Zylinderkörper (14) aufweist und die Befestigungsvorrichtung enthält:
- eine mit einem Rechtsgewinde versehene Mutter (22) zum Aufschrauben auf den Gewindeabschnitt (16) des Knopfs, wobei die Mutter auf ihrer der Trägerplatte (18) zugewandten Seite mehrere Treppen (30, 32, 34) aufweist, die sich jeweils über einen Bruchteil des Mutterumfangs erstrecken, sämtlich die gleiche Winkelerstreckung aufweisen und jeweils eine gleiche Anzahl von Stufen (36) besitzen, die sich regelmäßig in Bezug auf die vorausgehende Stufe in einer vorbestimmten, konstanten Höhe (h) erstrecken,
- und einen Ring (24) mit einer glatten Innenbohrung (44) eines Durchmessers, der etwas größer ist als derjenige des Körpers (14), wobei der Ring verschieblich zwischen der Mutter und der Trägerplatte gelagert ist und auf seiner der Mutter zugewandten Seite mehrere Treppen (46, 48, 50) aufweist, welche mit denen der Mutter zusammenpassen.

2. Befestigungsvorrichtung nach Anspruch 1,
dadurch gekennzeichnet,
daß die Mutter (22) drei Treppen (30, 32, 34) aufweist, die sich jeweils über 120° erstrecken.

3. Befestigungsvorrichtung nach Anspruch 1,
dadurch gekennzeichnet,
daß der Ring (24) drei Treppen (46, 48, 50) aufweist, die sich jeweils über 120° erstrecken.

4. Befestigungsvorrichtung nach Anspruch 1,
dadurch gekennzeichnet,
daß sämtliche Stufen der Mutter und des Rings die gleiche Tiefe (p) besitzen.

5. Befestigungsvorrichtung nach Anspruch 1,
dadurch gekennzeichnet,
daß die Mutter (22) und der Ring (24) jeweils innere, ebene Umfangsbahnen (38, 52) aufweisen, die miteinander in Berührung gelangen, wenn ihre Treppen zusammengefügt sind.

6. Befestigungsvorrichtung nach Anspruch 1,
dadurch gekennzeichnet,
daß die höchsten Stufen (39) der Mutter in Löcher (39₁) eingreifen, die durch den Ring hindurch im tiefsten Teil von dessen Treppen ausgebildet sind.

7. Befestigungsvorrichtung nach Anspruch 1,
dadurch gekennzeichnet,
daß die höchsten Stufen (35₁) des Rings mit Löchern (35) in Eingriff treten, die in der Mutter am Fuß von deren Treppen ausgebildet sind.

8. Befestigungsvorrichtung nach Anspruch 5,
dadurch gekennzeichnet,
daß die Mutter (22) mehrere Stufen (36a) besitzt, die unter die Höhe der Bahn (38) führen, eine Stufe (36b) besitzt, die sich auf der Höhe der Bahn befindet, und mehrere Stufen (36c) aufweist, die sich über die Höhe der Bahn erheben.

9. Befestigungsvorrichtung nach Anspruch 5,
dadurch gekennzeichnet,
daß der Ring (24) mehrere Stufen aufweist, welche unter die Höhe der Bahn (52) führen, eine Stufe besitzt, die sich auf der Stufe der Bahn befindet und mehrere Stufen aufweist, die sich über die Höhe der Bahn erheben.

## Claims

1. Device for fixing a luminous button (10) to a support plate (18), the said luminous button having a flared top (12) and a smooth cylindrical body (14) ending in a threaded portion (16), the said fixing device comprising:
- a nut (22) with a right-handed thread designed to be screwed on to the threaded portion (16) of the button, the said nut having several sets of steps (30, 32, 34) on the surface facing the support plate (18), each extending over a fraction of the circumference of the nut, all having the same size angle, and each of them including the same number of steps (36) rising regularly in relation to the previous one, by a constant, predetermined height (h),
- and a ring (24) with a smooth bore (44) slightly larger in diameter than that of the body (14), the said ring being fitted so that it slides between the nut and support plate and having several sets of steps (46, 48, 50) on the side facing the nut, which interlock with those of the nut.

2. Fixing device according to claim 1, characterised by the fact that the nut (22) has three sets of steps (30, 32, 34) each extending over 120°.

3. Fixing device according to claim 1, characterised by the fact that the ring (24) has three sets of steps (46, 48, 50) each extending over 120°.

4. Fixing device according to claim 1, characterised by the fact that all the steps of the nut and of the ring are of the same depth (p).

5. Fixing device according to claim 1, characterised by the fact that the nut (22) and the ring (24), respectively, have flat internal peripheral tracks (38, 52) which come into contact with each other when their sets of steps are interlocked with each other.

6. Fixing device according to claim 1, characterised by the fact that the highest steps (39) of the nut engage in the holes (39₁) bored through the ring at the lowest part of the sets of steps of the latter.

7. Fixing device according to claim 1, characterised by the fact that the highest steps (35₁) of the ring engage with the holes (35) bored into the nut at the bottom of the sets of steps of the latter.

8. Fixing device according to claim 5, characterised by the fact that the nut (22) has several steps (36a) which sink below the level of the track (38), a step (36b) situated at the level of the track, and several steps (36c) which rise above the level of the track.

9. Fixing device according to claim 5, characterised by the fact that the ring (24) has several steps which sink below the level of the track (52), a step situated at the level of the track and several steps which rise above the level of the track.
